# EUROPEAN PATENT APPLICATION

(11) **EP 4 160 742 A1**
(43) Date of publication of application: **05.04.2023**
(21) Application number: 21814544.9
(22) Date of filing: 21.05.2021
(51) Int. Cl.: H01M 4/525, C01B 17/22, C01F 17/36, C01G 53/00, H01M 4/36, H01M 4/505, H01M 4/62, H01M 10/052, H01M 10/0562

(54) **POSITIVE ELECTRODE ACTIVE MATERIAL, POSITIVE ELECTRODE MATERIAL, BATTERY AND METHOD FOR PRODUCING POSITIVE ELECTRODE ACTIVE MATERIAL**

(30) Priority: 27.05.2020 JP 2020092709
(71) Applicant: Panasonic Intellectual Property Management Co., Ltd., Osaka-shi, Osaka 540-6207 (JP)
(72) Inventor: NISHIO, Yusuke, Osaka-shi, Osaka 540-6207 (JP); NAKAMA, Yoshimasa, Osaka-shi, Osaka 540-6207 (JP)
(74) Representative: Grünecker Patent- und Rechtsanwälte PartG mbB
(86) International application number: PCT/JP2021/019287
(87) International publication number: WO 2021/241418

(57) **Abstract**

The positive electrode active material of the present disclosure includes a complex oxide represented by formula (1): LiNiₓMe₁₋ₓO₂ as a main component and has a hydrogen element content of 238.8 ppm by mass or less. Here, x satisfies 0.5 ≤ x ≤ 1, and Me is at least one element selected from the group consisting of Mn, Co, and Al.

## Description

### Technical Field

The present disclosure relates to a positive electrode active material, a positive electrode material, a battery, and a method for manufacturing a positive electrode active material.

### Background Art

PTL 1 discloses an all-solid battery using a positive electrode active material including a coating layer containing a coating material on the surface and dried within a range of 120°C to 300°C, and a sulfide solid electrolyte.

### Citation List

### Patent Literature

PTL 1: Japanese Unexamined Patent Application Publication No. 2018-125214

### Summary of Invention

### Technical Problem

The present disclosure provides a battery with a high capacity retention rate in high-temperature storage.

### Solution to Problem

The positive electrode active material of the present disclosure includes a complex oxide represented by following formula (1) as a main component and having a hydrogen element content of 238.8 ppm by mass or less,

LiNiₓMe₁₋ₓO₂ (1).

Here, x satisfies 0.5 ≤ x ≤ 1, and Me is at least one element selected from the group consisting of Mn, Co, and Al.

### Advantageous Effects of Invention

According to the present disclosure, a battery with a high capacity retention rate in high-temperature storage can be obtained.

### Brief Description of Drawing

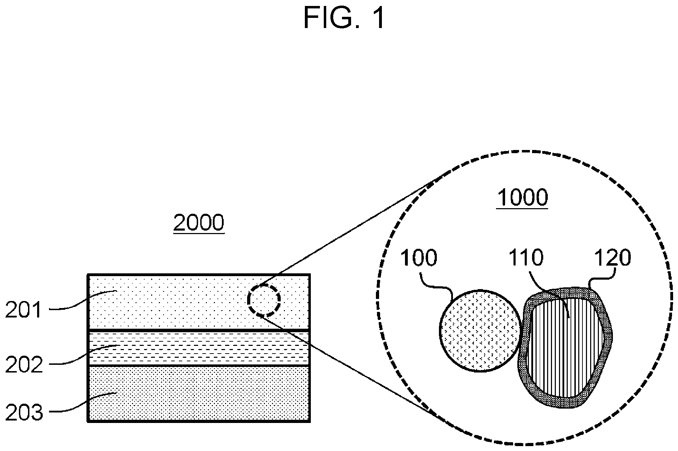

[Fig. 1] Fig. 1 is a cross-sectional view illustrating schematic configurations of a positive electrode material 1000 and a battery 2000 in Embodiments 1 and 2, respectively. Description of Embodiments

### (Underlying Knowledge Forming Basis of the Present Disclosure)

The present inventors diligently studied factors that cause capacity degradation of a battery in high-temperature storage. As a result, the present inventors have found that the hydrogen element contained in an active material reacts with a solid electrolyte to deteriorate the capacity. The present inventors considered based on this finding that treatment for reducing water, hydrated water, and hydroxyl groups in the active material and hydrogen ions in a crystal structure is necessary and proceeded with further research. As a result, it was found that the amount of hydrogen contained in the active material can be greatly reduced by performing drying under specified conditions. When a battery was manufactured using the thus-manufactured active material, capacity degradation by high-temperature storage in the state of charge could be reduced.

### (Outline of an aspect according to the present disclosure)

A positive electrode active material according to a 1st aspect of the present disclosure includes a complex oxide represented by following formula (1) as a main component and has a hydrogen element content of 238.8 ppm by mass or less,

LiNiₓMe₁₋ₓO₂ (1).

Here, x satisfies 0.5 ≤ x ≤ 1; and Me is at least one element selected from the group consisting of Mn, Co, and Al.

In the positive electrode active material according to the 1st aspect, the amount of hydrogen contained is small. Accordingly, it is possible to suppress the capacity degradation in high-temperature storage of a battery using the positive electrode active material according to the 1st aspect.

In a 2nd aspect of the present disclosure, for example, in the positive electrode active material according to the 1st aspect, the hydrogen element content may be 114.3 ppm by mass or less.

In the positive electrode active material according to the 2nd aspect, capacity degradation of a battery in high-temperature storage can be suppressed.

In a 3rd aspect of the present disclosure, for example, the positive electrode active material according to the 1st or 2nd aspect further includes a coating material that coats the surface of the positive electrode active material, and the coating material may contain lithium element (Li) and at least one element selected from the group consisting of oxygen element (O), fluorine element (F), and chlorine element (Cl).

In the positive electrode active material according to the 3rd aspect, capacity degradation of a battery in high-temperature storage can be suppressed.

In a 4th aspect of the present disclosure, for example, in the positive electrode active material according to the 3rd aspect, the coating material may include at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

In the positive electrode active material according to the 4th aspect, capacity degradation of a battery in high-temperature storage can be suppressed.

The positive electrode material according to a 5th aspect of the present disclosure includes the positive electrode active material according to any one of the 1st to 4th aspects and a solid electrolyte.

In the positive electrode material according to the 5th aspect, capacity degradation of a battery in high-temperature storage can be suppressed.

In a 6th aspect of the present disclosure, for example, in the positive electrode material according to the 5th aspect, the solid electrolyte is represented by following formula (2):

Li_{α}M_{β}X_{γ} (2).

Here, α, β, and γ are each independently a value larger than 0; M includes at least one selected from the group consisting of metallic elements other than Li and metalloid elements; and X includes at least one selected from the group consisting of F, Cl, Br, and I.

In the positive electrode material according to the 6th aspect, capacity degradation of a battery in high-temperature storage can be suppressed.

In a 7th aspect of the present disclosure, for example, in the positive electrode material according to the 6th aspect, M may include yttrium.

In the positive electrode material according to the 7th aspect, capacity degradation of a battery in high-temperature storage can be suppressed.

In an 8th aspect of the present disclosure, for example, in the positive electrode material according to the 6th or 7th aspect, formula (2) may satisfy 2.5 ≤ α ≤ 3, 1 ≤ β ≤ 1.1, and γ = 6.

In the positive electrode material according to the 8th aspect, capacity degradation of a battery in high-temperature storage can be suppressed.

In a 9th aspect of the present disclosure, for example, in the positive electrode material according to any one of the 6th to 8th aspects, X may include at least one selected from the group consisting of Cl and Br.

In the positive electrode material according to the 9th aspect, capacity degradation of a battery in high-temperature storage can be suppressed.

A battery according to a 10th aspect of the present disclosure includes a positive electrode containing the positive electrode material according to any one of the 5th to 9th aspects, a negative electrode, and an electrolyte layer disposed between the positive electrode and the negative electrode.

In the battery according to the 10th aspect, capacity degradation in high-temperature storage can be suppressed.

In an 11th aspect of the present disclosure, for example, in the battery according to the 10th aspect, the electrolyte layer may contain the solid electrolyte.

In the battery according to the 11th aspect, capacity degradation in high-temperature storage can be suppressed.

In a 12th aspect of the present disclosure, for example, in the battery according to the 10th or 11th aspect, the electrolyte layer may contain a halide solid electrolyte different from the solid electrolyte.

In the battery according to the 12th aspect, capacity degradation in high-temperature storage can be suppressed.

In a 13th aspect of the present disclosure, for example, in the battery according to any one of the 10th to 12th aspects, the electrolyte layer may contain a sulfide solid electrolyte.

In the battery according to the 13th aspect, capacity degradation in high-temperature storage can be suppressed.

A method for manufacturing a positive electrode active material according to a 14th aspect of the present disclosure is a method for manufacturing the positive electrode active material according to any one of the 1st to 4th aspects, wherein
the method includes at least one selected from the group consisting of drying a material to be constituting the positive electrode active material at a temperature of 70°C or more and less than 400°C for 1 hour or more, and drying the material to be constituting the positive electrode active material at a temperature of 500°C or more and 850°C or less for 0.5 hours or more.

According to the manufacturing method according to the 14th aspect, a positive electrode active material with a low amount of hydrogen can be manufactured. Consequently, capacity degradation of a battery in high-temperature storage can be suppressed.

Embodiments of the present disclosure will now be described with reference to the drawings.

### (Embodiment 1)

Fig. 1 is a cross-sectional view illustrating a schematic configuration of the positive electrode material 1000 in Embodiment 1.

The positive electrode material 1000 in Embodiment 1 includes a solid electrolyte 100 and a positive electrode active material 110. As shown in Fig. 1, the positive electrode active material 110 and the solid electrolyte 100 are, for example, in particulate form.

Here, the positive electrode active material 110 includes a complex oxide represented by following formula (1) as a main component and has a hydrogen element content of 238.8 ppm by mass or less,

LiNiₓMe₁₋ₓO₂ (1),

wherein
X satisfies 0.5 ≤ x ≤ 1, and Me is at least one element selected from the group consisting of Mn, Co, and Al.

According to the above configuration, the capacity retention rate of a battery in high-temperature storage can be improved.

Here, the term "main component" refers to the most abundant component by mass ratio.

The hydrogen element content in the positive electrode active material 110 is measured by a nondispersive infrared absorption method (NDIR), for example, an inert gas fusion-nondispersive infrared absorption method.

The hydrogen element content in the positive electrode active material 110 may be 114.3 ppm by mass or less.

The hydrogen element content in the positive electrode active material 110 may be 61.6 ppm by mass or more.

The positive electrode active material 110 has a low hydrogen element content of 238.8 ppm by mass or less. Consequently, the reaction between the hydrogen element contained in the positive electrode active material 110 and a solid electrolyte is suppressed, and the positive electrode active material 110 can therefore improve the capacity retention rate of a battery in high-temperature storage. The positive electrode active material 110 may include a material that can be used as an active material of an all-solid lithium ion battery, in addition to the complex oxide represented by formula (1).

Examples of the material that can be used as an active material of an all-solid lithium ion battery are LiCoO₂, LiNiₓCo₁₋ₓO₂ (0 < x < 0.5), LiNi_{1/3}Co_{1/3}Mn_{1/3}O₂, LiMnO₂, a different kind element substituent Li-Mn spinel (e.g., LiMn_{1.5}Ni_{0.5}O₄, LiMn_{1.5}Al_{0.5}O₄, LiMn_{1.5}Mg_{0.5}O₄, LiMn_{1.5}Co_{0.5}O₄, LiMn_{1.5}Fe_{0.5}O₄, or LiMn_{1.5}Zn_{0.5}O₄), lithium titanate (e.g., Li₄Ti₅O₁₂), lithium metal phosphate (e.g., LiFePO₄, LiMnPO₄, LiCoPO₄, and LiNiPO₄), and a transition metal oxide (e.g., V₂O₅ and MoOs).

Among the above-mentioned materials, a lithium-containing complex oxide selected from, for example, LiCoO₂, LiNiₓCo₁₋ₓO₂ (0 < x < 0.5), LiNi_{1/3}Co_{1/3}Mn_{1/3}O₂, LiMnO₂, a different kind element substituent Li-Mn spinel, and lithium metal phosphate is preferable.

The hydrogen element content in the positive electrode active material 110 is 238.8 ppm by mass or less. In application to an all-solid lithium ion battery, the side reaction between the solid electrolyte 100 described later and hydrogen contained in the positive electrode active material 110 at a high temperature and a high potential can be suppressed by suppressing the hydrogen element content in the positive electrode active material 110 to 238.8 ppm by mass or less. Accordingly, a battery with a high capacity retention rate in high-temperature storage is obtained by using the positive electrode active material 110.

The positive electrode active material 110 is dried by heating at a temperature of 70°C or more and less than 400°C for 1 hour or more and/or heating at a temperature of 500°C or more and 850°C or less for 0.5 hours or more in advance prior to constituting a positive electrode material. On this occasion, the atmosphere during drying may be vacuum or normal pressure and may be an atmosphere of a dew point of -60°C or less. As long as the dew point is -60°C or less, the drying may be performed in a nitrogen gas or in an oxygen gas. The hydrogen element content in the dried positive electrode active material 110 is measured by NDIR.

The positive electrode active material 110 may be dried by heating within a range of 70°C or more and less than 150°C for 12 hours or more in advance prior to constituting a positive electrode material. Alternatively, the positive electrode active material 110 may be dried by heating within a range of 70°C or more and less than 150°C for 12 hours or more in advance prior to constituting a positive electrode material and at least one heating selected from the group consisting of a range of 150°C or more and less than 400°C for 0.5 hours or more, and a range of 500°C or more and 850°C or less for 0.5 hours or more.

Heating within a range of 70°C or more and less than 150°C may be performed for 500 hours or less. That is, heating within a range of 70°C or more and less than 150°C may be performed for 12 hours or more and 500 hours or less. Heating within a range of 70°C or more and less than 150°C may be performed for 24 hours or more and 350 hours or less.

At least one selected from the group consisting of heating within a range of 150°C or more and less than 400°C and heating within a range of 500°C or more and 850°C or less may be performed for 24 hours or less. That is, at least one selected from the group consisting of heating within a range of 150°C or more and less than 400°C and heating within a range of 500°C or more and 850°C or less may be performed for 0.5 hours or more and 24 hours or less. At least one selected from the group consisting of heating within a range of 150°C or more and less than 400°C and heating within a range of 500°C or more and 850°C or less may be performed for 1 hour or more and 12 hours or less.

The positive electrode active material 110 may include a coating material 120 on the surface thereof. Incidentally, the coating material 120 may coat the entire surface of the positive electrode active material 110 or may partially coat the surface.

The coating material 120 may contain Li and at least one element selected from the group consisting of O, F, and Cl.

The coating material 120 may contain at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

Fig. 1 schematically shows a configuration of the positive electrode material 1000. As shown in Fig. 1, the positive electrode material 1000 includes a positive electrode active material 110 and a solid electrolyte 100.

As the solid electrolyte material included in the solid electrolyte 100, a halide solid electrolyte may be used.

The solid electrolyte 100 may be a compound represented by the following composition formula (2):

Li_{α}M_{β}X_{γ} (2).

Here, α, β, and γ are values larger than 0; M includes at least one selected from the group consisting of metallic elements other than Li and metalloid elements; and X includes at least one element selected from the group consisting of F, Cl, Br, and I.

Here, the metalloid element is B, Si, Ge, As, Sb, or Te., B, Si, Ge, As, Sb, or Te. The metallic element is any of all elements in Groups 1 to 12 of the Periodic Table excluding hydrogen or any of all elements in Groups 13 to 16 excluding the above-mentioned metalloid elements, C, N, P, O, S, and Se. That is, the metallic elements are those in a group of elements that can become cations when they form inorganic compounds with halogen compounds.

As the solid electrolyte 100, for example, Li₃YX₆, Li₂MgX₄, Li₂FeX₄, Li(Al,Ga,In)X₄, or Li₃(Al,Ga,In)X₆ can be used. Here, X is at least one selected from the group consisting of F, Cl, Br, and I.

In the present disclosure, "(A,B,C)" means "at least one selected from the group consisting of A, B, and C".

According to the above configuration, the initial charge and discharge efficiency of a battery can be improved.

Formula (2) may satisfy 2.5 ≤ α ≤ 3, 1 ≤ β ≤ 1.1, and γ = 6.

In formula (2), X may include at least one selected from the group consisting of Cl and Br.

In formula (2), M may include yttrium (Y).

The solid electrolyte including Y may be, for example, a compound represented by a composition formula of LiₐM'_{b}Y_{c}X₆. Here, a + mb + 3c = 6 and c > 0 are satisfied; M' is at least one selected from the group consisting of metallic elements excluding Li and Y and metalloid elements; m denotes the valence of M'; and X is at least one selected from the group consisting of F, Cl, Br, and I.

As the M', at least one selected from the group consisting of Mg, Ca, Sr, Ba, Zn, Sc, Al, Ga, Bi, Zr, Hf, Ti, Sn, Ta, and Nb may be used.

As the solid electrolyte including Y, specifically, Li₃YF₆, Li₃YCl₆, Li₃YBr₆, Li₃YI₆, Li₃YBrCl₅, Li₃YBr₃Cl₃, Li₃YBr₅Cl, Li₃YBr₅I, Li₃YBr₃I₃, Li₃YBrI₅, Li₃YClI₅, Li₃YCl₃I₃, Li₃YCl₅I, Li₃YBr₂Cl₂I₂, Li₃YBrCl₄I, Li_{2.7}Y_{1.1}Cl₆, Li_{2.5}Y_{0.5}Zr_{0.5}Cl₆, Li_{2.5}Y_{0.3}Zr_{0.7}Cl₆, etc. can be used.

According to the above configuration, the resistance of a battery can be further reduced.

Incidentally, the halide solid electrolyte does not have to include sulfur. In addition, the shapes of the solid electrolyte 100 and the positive electrode active material 110 in Embodiment 1 are not particularly limited and may be, for example, needle, spherical, or oval spherical. For example, the shapes of the solid electrolyte 100 and positive electrode active material 110 may be particulate.

For example, when the shape of the solid electrolyte 100 in Embodiment 1 is particulate (e.g., spherical), the median diameter may be 100 µm or less.

When the median diameter of the solid electrolyte 100 is 100 µm or less, the positive electrode active material 110 and the solid electrolyte 100 can form a good dispersion state in the positive electrode material 1000. Consequently, the charge and discharge characteristics of a battery are improved.

In addition, in Embodiment 1, the median diameter of the solid electrolyte 100 may be 10 µm or less.

According to the above configuration, in the positive electrode material 1000, the positive electrode active material 110 and the solid electrolyte 100 can form a good dispersion state.

In addition, in Embodiment 1, the solid electrolyte 100 may be smaller than the median diameter of the positive electrode active material 110.

According to the above configuration, the solid electrolyte 100 and the positive electrode active material 110 can form a better dispersion state in an electrode.

The median diameter of the positive electrode active material 110 may be 0.1 µm or more and 100 µm or less.

When the median diameter of the positive electrode active material 110 is 0.1 µm or more, in the positive electrode material 1000, the positive electrode active material 110 and the solid electrolyte 100 can form a good dispersion state. As a result, the charge and discharge characteristics of a battery are improved.

When the median diameter of the positive electrode active material 110 is 100 µm or less, the diffusion speed of lithium in the positive electrode active material 110 can be sufficiently secured. Consequently, high-output operation of the battery is possible.

In the present disclosure, the "median diameter" means the particle diameter at which the accumulated volume is equal to 50% in a volume-based particle size distribution. The volume-based particle size distribution is measured with, for example, a laser diffraction measurement apparatus or an image analyzer.

Incidentally, in the positive electrode material 1000 in Embodiment 1, particles of the solid electrolyte 100 and particles of the positive electrode active material 110 may be in contact with each other as shown in Fig. 1. On this occasion, the coating material 120 and the positive electrode active material 110 are in contact with each other.

The positive electrode material 1000 in Embodiment 1 may include particles of a plurality of solid electrolytes 100 and particles of a plurality of positive electrode active materials 110.

In addition, amount of the solid electrolyte 100 and amount of the positive electrode active material 110 contained in the positive electrode material 1000 in Embodiment 1 may be the same as or different from each other.

### (Embodiment 2)

Embodiment 2 will now be described. The description overlapping with that of Embodiment 1 will be appropriately omitted.

Fig. 1 is a cross-sectional view illustrating a schematic configuration of a battery 2000 in Embodiment 2. The battery 2000 in Embodiment 2 includes a positive electrode 201, an electrolyte layer 202, and a negative electrode 203.

The positive electrode 201 includes the positive electrode material 1000.

The electrolyte layer 202 is disposed between the positive electrode 201 and the negative electrode 203.

The volume ratio of the positive electrode active material 110 and the solid electrolyte 100 contained in the positive electrode 201, "v1 : 100 - v1", may satisfy 30 ≤ v1 ≤ 95. When 30 ≤ v1 is satisfied, an energy density of the battery 2000 is sufficiently secured. When v1 ≤ 95 is satisfied, high-output operation is possible.

The thickness of the positive electrode 201 may be 10 µm or more and 500 µm or less. When the thickness of the positive electrode 201 is 10 µm or more, an energy density of the battery 2000 is sufficiently secured. When the thickness of the positive electrode 201 is 500 µm or less, high-output operation is possible.

The electrolyte layer 202 is a layer containing an electrolyte material. The electrolyte material is, for example, a solid electrolyte material. That is, the electrolyte layer 202 may be a solid electrolyte layer. As the solid electrolyte, the materials exemplified as the material of the solid electrolyte 100 in Embodiment 1 may be used. That is, the electrolyte layer 202 may contain a solid electrolyte having the same composition as that of the solid electrolyte contained in the positive electrode material 1000.

According to the above configuration, the charge and discharge efficiency of the battery 2000 can be more improved.

The electrolyte layer 202 may contain a halide solid electrolyte having a composition different from that of the solid electrolyte contained in the positive electrode material 1000.

The electrolyte layer 202 may contain a sulfide solid electrolyte.

The electrolyte layer 202 may contain only one solid electrolyte selected from the group of the above-mentioned solid electrolytes or may contain two or more solid electrolytes selected from the group of the above-mentioned solid electrolytes. Plurality of solid electrolytes have compositions different from each other. For example, the electrolyte layer 202 may contain a halide solid electrolyte and a sulfide solid electrolyte.

The thickness of the electrolyte layer 202 may be 1 µm or more and 300 µm or less. When the thickness of the electrolyte layer 202 is 1 µm or more, the positive electrode 201 and the negative electrode 203 are unlikely to be short-circuited. When the thickness of the electrolyte layer 202 is 300 µm or less, high-output operation is possible.

The negative electrode 203 contains a material that has a property of occluding and releasing metal ions (e.g., lithium ions). The negative electrode 203 contains, for example, a negative electrode active material.

As the negative electrode active material, for example, a metal material, a carbon material, an oxide, a nitride, a tin compound, or a silicon compound can be used. The metal material may be a single metal. Alternatively, the metal material may be an alloy. Examples of the metal material include lithium metals and lithium alloys. Examples of the carbon material include natural graphite, coke, carbon under graphitization, carbon fibers, spherical carbon, artificial graphite, and amorphous carbon. From the viewpoint of capacity density, silicon (Si), tin (Sn), a silicon compound, or a tin compound can be suitably used.

The negative electrode 203 may contain a solid electrolyte material. According to the above configuration, the lithium ion conductivity in the negative electrode 203 can be enhanced, and high-output operation is possible. As the solid electrolyte, the materials exemplified in Embodiment 1 may be used. That is, the negative electrode 203 may contain a solid electrolyte having the same composition as that of the solid electrolyte contained in the positive electrode material 1000.

The median diameter of the negative electrode active material may be 0.1 µm or more and 100 µm or less.

When the median diameter of the negative electrode active material is 0.1 µm or more, the negative electrode active material and the solid electrolyte material can form a good dispersion state. As a result, the charge and discharge characteristics of a battery are improved.

In addition, when the median diameter of the negative electrode active material is 100 µm or less, the diffusion speed of lithium in the negative electrode active material can be sufficiently secured. Consequently, high-output operation of the battery is possible.

The median diameter of the negative electrode active material may be larger than that of the solid electrolyte material. Consequently, the negative electrode active material and the solid electrolyte material can form a good dispersion state.

The volume ratio of the negative electrode active material and the solid electrolyte material contained in the negative electrode 203, "v2 : 100 - v2", may satisfy 30 ≤ v2 ≤ 95. When 30 ≤ v2 is satisfied, an energy density of the battery 2000 is sufficiently secured. When v2 ≤ 95 is satisfied, high-output operation is possible.

The thickness of the negative electrode 203 may be 10 µm or more and 500 µm or less. When the thickness of the negative electrode 203 is 10 µm or more, an energy density of the battery 2000 is sufficiently secured. When the thickness of the negative electrode 203 is 500 µm or less, high-output operation is possible.

At least one selected from the group consisting of the positive electrode 201, the electrolyte layer 202, and the negative electrode 203 may include a binder for the purpose of improving the adhesion between particles. The binder is used for improving the adhesion of the materials constituting the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropolypropylene, styrene-butadiene-rubber, and carboxymethylcellulose. In addition, as the binder, a copolymer of two or more materials selected from tetrafluoroethylene, hexafluoroethylene, hexafluoropropylene, perfluoroalkylvinylether, vinylidene fluoride, chlorotrifluoroethylene, ethylene, propylene, pentafluoropropylene, fluoromethylvinylether, acrylic acid, and hexadiene can be used. Moreover, a mixture of two or more selected from these materials may be used as the binder.

At least one selected from the group consisting of the positive electrode 201 and the negative electrode 203 may include a conductive assistant for the purpose of enhancing the electron conductivity. As the conductive assistant, for example, graphite such as natural graphite or artificial graphite, carbon black such as acetylene black or Ketjen black, a conductive fiber such as a carbon fiber or a metal fiber, a metal powder such as fluorinated carbon or aluminum, a conductive whisker such as zinc oxide or potassium titanate, a conductive metal oxide such as titanium oxide, or a conductive polymer compound such as polyaniline, polypyrrole, or polythiophene can be used. In the case of using a carbon conductive assistant, it is possible to reduce the cost.

Incidentally, the battery in Embodiment 2 can be configured as batteries of various shapes, such as a coin type, a cylindrical type, a square type, a sheet type, a button type, a flat type, and a stacked type.

### EXAMPLES

The present disclosure will now be described in more detail with reference to Examples.

### «Example 1»

### [Production of positive electrode active material]

A positive electrode active material, LiNi_{0.8}(Co,Mn)_{0.2}O₂, was vacuum-dried at 100°C for 2 weeks and was then taken out in a dry atmosphere with a dew point of -20°C or less. Hereinafter, LiNi_{0.8}(Co,Mn)_{0.2}O₂ is referred to as NCM. Thus, a positive electrode active material of Example 1 was obtained.

### [Measurement of hydrogen amount]

The amount of hydrogen element contained in the positive electrode active material produced in Example 1 was measured with a hydrogen analyzer (manufactured by HORIBA, Ltd., EMGA-930) using an inert gas fusion-nondispersive infrared absorption method. The amount of hydrogen element was measured as the integrated value for 10 seconds from the start of detection at an output of the gas extraction furnace of 3.5 kW. The hydrogen element content of the positive electrode active material of Example 1 was 64.4 ppm by mass.

### [Production of halide solid electrolyte]

Raw material powders, LiCl, LiBr, and YCl₃, were weighed at a molar ratio, LiCl : LiBr : YCl₃, of 1 : 2 : 1 in an argon glove box with a dew point of -60°C or less. These powders were pulverized and mixed in a mortar. Subsequently, milling treatment was performed using a planetary ball mill at 600 rpm for 12 hours.

As in above, a powder of halide solid electrolyte of Example 1 represented by a composition formula Li₃YBr₂Cl₄ was obtained.

### [Production of positive electrode material]

The halide solid electrolyte Li₃YBr₂Cl₄ and the positive electrode active material of Example 1 were weighed at a mass ratio of 20 : 80 in an argon glove box with a dew point of -60°C or less. These materials were mixed in an agate mortar to produce a positive electrode material of Example 1.

### [Production of sulfide solid electrolyte]

Li₂S and P₂S₅ were weighed at a molar ratio, Li₂S : P₂S₅, of 75 : 25 in an argon glove box with a dew point of -60°C or less. These materials were pulverized and mixed in a mortar. Subsequently, milling treatment was performed using a planetary ball mill (manufactured by Fritsch, P-7 type) at 510 rpm for 10 hours to obtain a glass-like solid electrolyte. The glass-like solid electrolyte was heat-treated in an inert atmosphere at 270°C for 2 hours. Consequently, a glass-ceramic-like sulfide solid electrolyte was obtained.

### [Production of battery]

The following process was performed using the above-described halide solid electrolyte Li₃YBr₂Cl₄, the positive electrode material of Example 1, and the above-described glass-ceramic-like sulfide solid electrolyte.

First, the glass-ceramic-like sulfide solid electrolyte (80 mg), the halide solid electrolyte Li₃YBr₂Cl₄ (40 mg), and the positive electrode material (12 mg) of Example 1 were stacked in this order in an insulating outer cylinder and were pressure-molded at a pressure of 720 MPa to obtain a positive electrode and a solid electrolyte layer.

Subsequently, metallic Li (thickness: 200 µm) was stacked on the solid electrolyte layer on the opposite side to the side in contact with the positive electrode, followed by pressure-molding at a pressure of 80 MPa to produce a stack composed of the positive electrode, the solid electrolyte layer, and a negative electrode.

Subsequently, current collectors made of stainless steel were disposed on and under the stack, and the current collectors were provided with current collector leads.

Ultimately, the inside of the insulating outer cylinder was isolated from the outside atmosphere by sealing the insulating outer cylinder using an insulating ferrule to produce a battery of Example 1.

### [Electrochemical test]

A charge and discharge test was performed using the above-described battery of Example 1 under the following conditions.

The battery was disposed in a thermostatic tank of 25°C and connected to a potentiostat (manufactured by Solartron Analytical) loaded with a frequency response analyzer.

Constant current charging at a current value of 96 µA corresponding to 0.05 C rate (20-hour rate) with respect to the theoretical capacity of the battery until a voltage of 4.3 V and constant current discharging until a voltage of 2.5 V were performed twice. Subsequently, constant current charging at 0.05 C rate (20-hour rate) until a voltage of 4.3 V was performed again, and the battery was then disposed in a thermostatic tank of 85°C for 1 day. The battery was taken out and was then air-cooled to room temperature. The battery was disposed in a thermostatic tank of 25°C again and was connected to a potentiostat, and constant current discharging at a current value of 96 µA corresponding to 0.05 Crate (20-hour rate) was similarly performed and was ended at a voltage of 2.5 V.

The discharge capacity of the second charge and discharge of the battery of Example 1 was 1767.4 µAh, the discharge capacity after storage was 1485.5 µAh, and the capacity retention rate after storage was 84.1%.

### «Examples 2 to 5»

### [Production of positive electrode active material]

NCM was vacuum-dried at 100°C for 2 weeks and was then heat-treated at 300°C for 1 hour in a nitrogen gas atmosphere. Subsequently, the NCM was taken out in a dry atmosphere with a dew point of -20°C or less. Thus, a positive electrode active material of Example 2 was obtained.

NCM was vacuum-dried at 100°C for 2 weeks and was then heat-treated at 500°C for 1 hour in a nitrogen gas atmosphere. Subsequently, the NCM was taken out in a dry atmosphere with a dew point of -20°C or less. Thus, a positive electrode active material of Example 3 was obtained.

NCM was vacuum-dried at 100°C for 2 weeks and was then heat-treated at 600°C for 1 hour in a nitrogen gas atmosphere. Subsequently, the NCM was taken out in a dry atmosphere with a dew point of -20°C or less. Thus, a positive electrode active material of Example 4 was obtained.

NCM was vacuum-dried at 100°C for 2 weeks and was then heat-treated at 800°C for 1 hour in a nitrogen gas atmosphere. Subsequently, the NCM was taken out in a dry atmosphere with a dew point of -20°C or less. Thus, a positive electrode active material of Example 5 was obtained.

### [Measurement of hydrogen element content]

The hydrogen element content in the positive electrode active materials produced in Examples 2 to 5 were measured as in Example 1. The hydrogen element contents in the positive electrode active materials of Examples 2 to 5 are shown in Table 1.

### [Production of positive electrode material]

Positive electrode materials of Examples 2 to 5 were produced as in Example 1 except that the positive electrode active materials of Examples 2 to 5 were respectively used as the positive electrode active materials.

### [Production of battery]

Batteries of Examples 2 to 5 were produced as in Example 1 except that the positive electrode materials of Examples 2 to 5 were respectively used as the positive electrode materials.

### [Electrochemical test]

A charge and discharge test was performed as in Example 1 using the batteries of Examples 2 to 5. The capacity retention rates of the batteries of Examples 2 to 5 after storage are shown in Table 1 below.

### <<Comparative Example 1»

### [Production of positive electrode active material]

NCM was vacuum-dried at 100°C for 2 weeks and was then heat-treated at 400°C for 1 hour in a nitrogen gas atmosphere. Subsequently, the NCM was taken out in a dry atmosphere with a dew point of -20°C or less. Thus, a positive electrode active material of Comparative Example 1 was obtained.

### [Measurement of hydrogen amount]

The amount of hydrogen in the positive electrode active material produced in Comparative Example 1 was measured as in Example 1. The amount of hydrogen in the positive electrode active material of Comparative Example 1 is shown in Table 1 below.

### [Production of positive electrode material]

A halide solid electrolyte and the positive electrode active material of Comparative Example 1 were weighed at a weight ratio of 20 : 80 in an argon glove box with a dew point of -60°C or less. These materials were mixed in an agate mortar to produce a positive electrode material of Comparative Example 1.

### [Production of battery]

A battery of Comparative Example 1 was produced as in Example 1 using the above-mentioned halide solid electrolyte, the positive electrode material of Comparative Example 1, and a sulfide solid electrolyte.

### [Electrochemical test]

A charge and discharge test was performed as in Example 1 using the battery of Comparative Example 1. The capacity retention rate of the battery of Comparative Example 1 after storage is shown in Table 1 below.

**[Table 1]**

| | | Hydrogen element content (ppm) | Capacity retention rate (%) |
|---|---|---|---|
| Example 1 | 100°C vacuum drying only | 64.4 | 84.1 |
| Example 2 | 100°C vacuum drying 300°C N₂ drying | 238.8 | 78.7 |
| Example 3 | 100°C vacuum drying 500°C N₂ drying | 61.6 | 81.2 |
| Example 4 | 100°C vacuum drying 600°C N₂ drying | 114.3 | 81.1 |
| Example 5 | 100°C vacuum drying 800°C N₂ drying | 85.9 | 82.1 |
| Comparative Example 1 | 100°C vacuum drying 400°C N₂ drying | 241.6 | 76.2 |

### <<Consideration>>

It is demonstrated from the results shown in Table 1 that simply increasing the drying temperature does not reduce the amount of hydrogen. One of the causes thereof is thought that hydrogen element is lost in the form of water during heat drying and at the same also reacts with the positive electrode active material and changes to a form that is hardly dried. In addition, the reactivity of the surface of the positive electrode active material is enhanced by removing the impurities on the surface of the positive electrode active material by drying, and thereby water or a water-derived reaction product is generated by the influence of the dew point at the time of taking out, which is also thought to be one of the causes.

The capacity retention rate of a battery is improved by suppressing the hydrogen element content to 238.8 ppm by mass or less. The hydrogen element content may be further desirably 114.3 ppm by mass or less. For example, the hydrogen element content may be 61.6 ppm by mass or more.

### Industrial Applicability

The battery of the present disclosure can be used, for example, as an all-solid battery.

### Reference Signs List

1000 positive electrode material
100 solid electrolyte
110 positive electrode active material
120 coating material
2000 battery
201 positive electrode
202 electrolyte layer
203 negative electrode

## Claims

1. A positive electrode active material comprising a complex oxide represented by following formula (1) as a main component and having a hydrogen element content of 238.8 ppm by mass or less,
LiNiₓMe₁₋ₓO₂ (1),
where x satisfies 0.5 ≤ x ≤ 1; and Me is at least one element selected from the group consisting of Mn, Co, and Al.

2. The positive electrode active material according to claim 1, wherein
the hydrogen element content is 114.3 ppm by mass or less.

3. The positive electrode active material according to claim 1 or 2, further comprising a coating material that coats a surface of the positive electrode active material, wherein
the coating material contains lithium element (Li) and at least one element selected from the group consisting of oxygen element (O), fluorine element (F), and chlorine element (Cl).

4. The positive electrode active material according to claim 3, wherein
the coating material further includes at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

5. A positive electrode material comprising:
the positive electrode active material according to any one of claims 1 to 4; and a solid electrolyte.

6. The positive electrode material according to claim 5, wherein
the solid electrolyte is represented by following formula (2):
Li_{α}M_{β}X_{γ} (2),
where, α, β, and γ are each independently a value larger than 0;
M includes at least one selected from the group consisting of metallic elements other than Li and metalloid elements; and
X includes at least one selected from the group consisting of F, Cl, Br, and I.

7. The positive electrode material according to claim 6, wherein
M includes yttrium.

8. The positive electrode material according to claim 6 or 7, wherein
formula (2) satisfies 2.5 ≤ α ≤ 3, 1 ≤ β ≤ 1.1, and γ = 6.

9. The positive electrode material according to any one of claims 6 to 8, wherein
X includes at least one selected from the group consisting of Cl and Br.

10. A battery comprising:
a positive electrode including the positive electrode material according to any one of claims 5 to 9;
a negative electrode; and
an electrolyte layer disposed between the positive electrode and the negative electrode.

11. The battery according to claim 10, wherein the electrolyte layer includes the solid electrolyte.

12. The battery according to claim 10 or 11, wherein
the electrolyte layer includes a halide solid electrolyte different from the solid electrolyte.

13. The battery according to any one of claims 10 to 12, wherein
the electrolyte layer includes a sulfide solid electrolyte.

14. A method for manufacturing the positive electrode active material according to any one of claims 1 to 4, the method comprising
at least one selected from the group consisting of drying a material to be constituting the positive electrode active material at a temperature of 70°C or more and less than 400°C for 1 hour or more, and drying the material to be constituting the positive electrode active material at a temperature of 500°C or more and 850°C or less for 0.5 hours or more.
